# EUROPEAN PATENT APPLICATION

(11) **EP 4 175 053 A1**
(43) Date of publication of application: **03.05.2023**
(21) Application number: 21833807.7
(22) Date of filing: 25.06.2021
(51) Int. Cl.: H01M 50/572, H01M 10/42, H01M 50/531, H01M 10/04, H01M 10/0587

(54) **ELECTRODE ASSEMBLY AND SECONDARY BATTERY USING SAME**

(30) Priority: 30.06.2020 KR 20200079946
(71) Applicant: Samsung SDI Co., Ltd., Yongin-si, Gyeonggi-do 17084 (KR)
(72) Inventor: KIM, Cheon Soo, Yongin-si, Gyeonggi-do 17084 (KR)
(74) Representative: Marks & Clerk LLP
(86) International application number: PCT/KR2021/008029
(87) International publication number: WO 2022/005119

(57) **Abstract**

The present invention relates to: an electrode assembly which can improve safety by securing the flatness and gap uniformity between pole plates; and a secondary battery using same. For example, disclosed is a secondary battery comprising: an anode plate comprising an anode current collector, an anode active material layer formed by coating an anode active material on the anode current collector, and an anode center uncoated part in which an anode tab is attached to the center of the anode current collector; a cathode plate comprising a cathode current collector, a cathode active material layer formed by coating a cathode active material on the cathode current collector, and a cathode center uncoated part in which a cathode tab is attached to the center of the cathode current collector; a separator interposed between the anode plate and the cathode plate; and an electrode assembly formed of an insulation coating layer formed on a portion, on the cathode current collector, facing the anode tab, a portion facing the anode tab and the anode center uncoated part, or a portion facing the anode tab, the anode center uncoated part, and an insulating member attached to the anode tab.

## Description

### TECHNICAL FIELD

The present invention relates to an electrode assembly and a secondary battery using same.

### BACKGROUND ART

Unlike a primary battery that cannot be charged, a secondary battery is a battery that can be charged and discharged. Low-capacity secondary batteries are used in small portable electronic devices, such as smart phones, feature phones, notebook computers, digital cameras, and camcorders, and high-capacity secondary batteries are widely used as power sources for driving motors and power storage in hybrid and electric vehicles. etc.

Such a secondary battery includes an electrode assembly including a cathode and an anode, a case accommodating same, and electrode terminals connected to the electrode assembly. The case may be classified into a circular type, a prismatic type, and a pouch type according to the shape thereof. Specifically, the pouch-type secondary battery may be formed of a laminated exterior material that is easily deformable into various shapes and has a low weight.

The above information disclosed in this Background section is only for enhancement of understanding of the background of the invention and therefore it may contain information that does not constitute prior art.

### DESCRIPTION OF EMBODIMENTS

### TECHNICAL PROBLEM

The present invention provides an electrode assembly which can improve safety by securing gap uniformity and flatness between pole plates, and a secondary battery using same.

### SOLUTION TO PROBLEM

A secondary battery according to the present invention comprises: an anode plate comprising an anode current collector, an anode active material layer formed by coating an anode active material on the anode current collector, and an anode center uncoated part in which an anode tab is attached to the center of the anode current collector; a cathode plate comprising a cathode current collector, a cathode active material layer formed by coating a cathode active material on the cathode current collector, and a cathode center uncoated part in which a cathode tab is attached to the center of the cathode current collector; a separator interposed between the anode plate and the cathode plate; and an electrode assembly formed of an insulation coating layer formed on a portion, on the cathode current collector, facing the anode tab, a portion facing the anode tab and the anode center uncoated part, or a portion facing the anode tab, the anode center uncoated part, and an insulating member attached to the anode tab.

The insulation coating layer may include a first insulation coating layer formed on a first surface of the cathode current collector and a second insulation coating layer formed on a second surface opposite to the first surface.

The first insulation coating layer may face an anode center uncoated part located on the second surface of the anode current collector.

The second insulation coating layer may face an anode center uncoated part located on the first surface of the anode current collector.

The second insulation coating layer may be positioned to be spaced apart from the first insulation coating layer by a one-turn moving distance in the winding direction of the electrode assembly.

The first insulation coating layer and the second insulation coating layer may be formed at one side of the cathode center uncoated part.

The insulation coating layer may include a ceramic material.

The ceramic material may be formed of any one of Al₂O₃, SiO₂, TiO₂, SnO₂, CeO₂, MgO, NiO, CaO, ZnO, ZrO₂, Y₂O₃, SrTiOs, BaTiOs, Mg(OH)₂, or a combination thereof.

A width of the insulation coating layer may be equal to or greater than a width of the anode center uncoated part.

A thickness of the insulation coating layer may be the same as that of the cathode active material layer.

### ADVANTAGEOUS EFFECTS OF INVENTION

The electrode assembly according to the present invention can improve safety and reliability by forming an insulation coating layer on a portion of the cathode plate facing the anode tab to prevent a short circuit between the cathode plate and the anode tab.

In addition, in the electrode assembly according to the present invention, by forming an insulation coating layer having the same thickness as the cathode active material layer between the cathode active material layers, it is possible to secure gap uniformity and flatness between the electrode plates, thereby improving safety.

### BRIEF DESCRIPTION OF DRAWINGS

FIG. 1 is an exploded perspective view showing an electrode assembly according to an embodiment of the present invention before being wound.
FIG. 2 is a cross-sectional view showing an electrode assembly according to an embodiment of the present invention before being wound.
FIG. 3 is a cross-sectional view showing an electrode assembly according to the present invention.
FIGS. 4 and 5 are exploded perspective views showing a secondary battery using an electrode assembly according to the present invention.

### BEST MODE

Hereinafter, preferred embodiments of the present invention will be described in detail with reference to the accompanying drawings.

Examples of the present invention are provided to more completely explain the present invention to those skilled in the art, and the following examples may be modified in various other forms. The present invention, however, may be embodied in many different forms and should not be construed as being limited to the example (or exemplary) embodiments set forth herein. Rather, these example embodiments are provided so that this invention will be thorough and complete and will convey the aspects and features of the present invention to those skilled in the art.

As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

In addition, in the accompanying drawings, sizes or thicknesses of various components are exaggerated for brevity and clarity, and like numbers refer to like elements throughout.

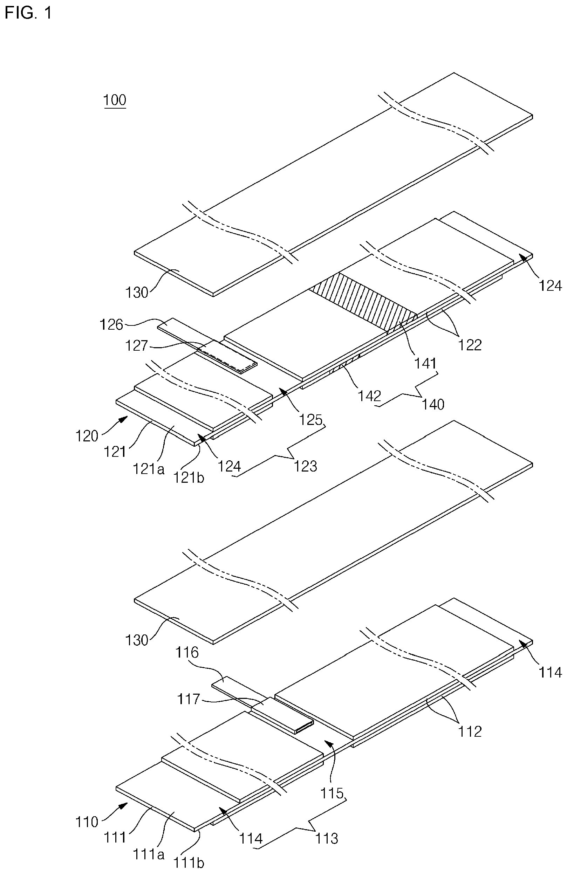

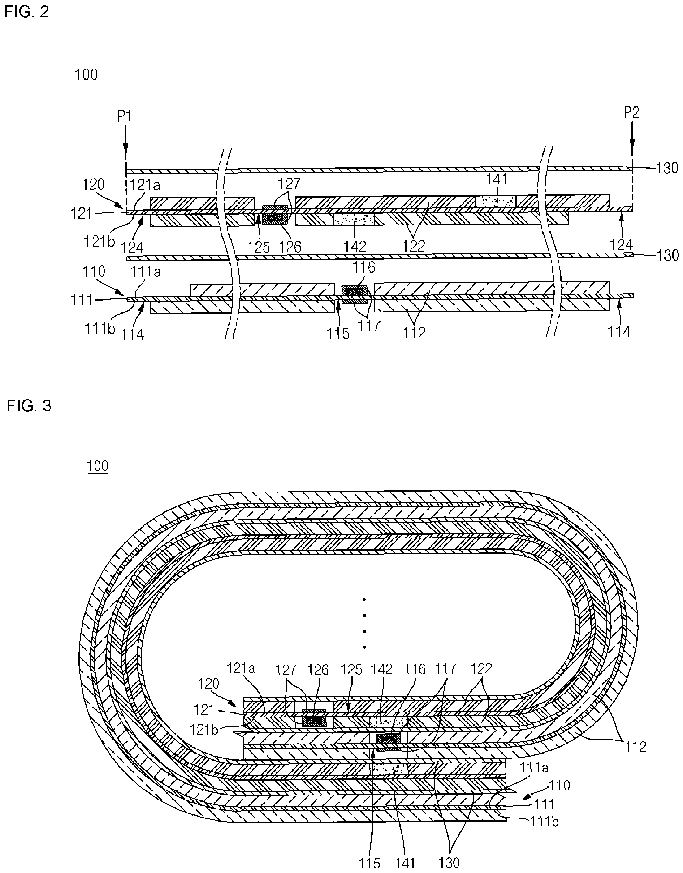

FIG. 1 is an exploded perspective view showing an electrode assembly according to an embodiment of the present invention before being wound. FIG. 2 is a cross-sectional view showing an electrode assembly according to an embodiment of the present invention before being wound. FIG. 3 is a cross-sectional view showing an electrode assembly according to the present invention.

Referring to FIGS. 1 to 3, the electrode assembly 100 according to an embodiment of the present invention may include an anode plate 110, a cathode plate 120, a separator 130, and an insulation coating layer 140.

The anode plate 110 includes, for example, but is not limited to, an anode current collector 111 made of a thin conductive metal plate, for example, copper or nickel foil or mesh, and an anode active material layer 112 coated on the anode current collector 111. The anode current collector 111 includes a first surface 111a and a second surface 111b opposite to the first surface 111a. The anode active material layer 112 may be formed on the first surface 111a and the second surface 111b of the anode current collector 111. The anode active material layer 112 may be formed using, for example, but not limited to, a material in which a conductive material such as carbon black or graphite powder and a binder for fixing the active material are mixed with the anode active material. Here, as the anode active material, a carbon-based material, Si, Sn, tin oxide, tin alloy composite, transition metal oxide, lithium metal nitrite, or metal oxide may be used.

In addition, the anode plate 110 includes an anode uncoated part 113 in which the anode active material layer 112 is not formed in the anode current collector 111. That is, the anode uncoated part 113 may be part of the anode current collector 111. The anode uncoated part 113 may include end uncoated parts 114 formed at both ends of the anode current collector 111 and a center uncoated part 115 formed at the center thereof. Here, the center uncoated part 115 formed on the anode plate 110 may be referred to as an anode center uncoated part. Therefore, the active material layer 112 may be formed on both sides of the anode current collector 111 on the basis of the anode center uncoated part 115. An approximately flat anode tab 116 may be fixed to the anode center uncoated part 115. The anode tab 116 may be fixed to either the first surface 111a or the second surface 111b of the anode current collector 111. In some examples, after being welded to the anode center uncoated part 115, the anode tab 116 may be attached as an insulating member 117. In addition, one end of the anode tab 116 may be electrically connected to the anode center uncoated part 115, and the other end may protrude and extend to the outside. The insulating member 117 may be attached to the anode center uncoated part 115 while surrounding the anode tab 116. In addition, the insulating member 117 may be attached to a surface opposite to the surface to which the anode tab 116 is attached. Here, the sum of the thickness of the anode tab 116 and the thickness of the insulating member 117 may be equal to or smaller than the thickness of the anode active material layer 112. The insulating member 117 may be made of, for example, an insulating tape containing polyphenylene sulfide (PS), polyimide (PI), or polypropylene (PP). The insulating member 117 may prevent the anode tab 116 and/or the anode current collector 111 from being short-circuited with the cathode plate 120.

The cathode plate 120 may include a cathode current collector 121 made of, for example, but not limited to, a thin metal plate having excellent conductivity, such as aluminum foil or mesh, and a cathode active material layer 122 coated on the cathode current collector 121. The cathode current collector 121 includes a first surface 121a and a second surface 121b opposite to the first surface 121a. The cathode active material layer 122 may be formed on the cathode active material by using, for example, but not limited to, a material in which a conductive material, such as carbon black or graphite powder, and a binder for fixing the active material are mixed. Here, as the cathode active material, a chalcogenide compound may be used, and, for example, a complex metal oxide, such as LiCoO₂, LiMn₂O₄, LiNiO₂, or LiNiMnO₂, may be used.

In addition, the cathode plate 120 includes a cathode uncoated part 123 in which the cathode active material layer 122 is not formed in the cathode current collector 121. That is, the cathode uncoated part 123 may be part of the cathode current collector 121. The cathode uncoated part 123 may include end uncoated parts 124 formed at both ends of the cathode current collector 121 and a center uncoated part 125 formed at the center thereof. Here, the center uncoated part 125 formed on the cathode plate 120 may be referred to as a cathode center uncoated part. Therefore, the cathode active material layer 122 may be formed at both sides of the cathode current collector 121 on the basis of the center uncoated part 125. An approximately flat cathode tab 126 may be fixed to the cathode center uncoated part 125. The cathode tab 126 may be fixed to either the first surface 121a or the second surface 121b of the cathode current collector 121. In some examples, after being welded to the cathode center uncoated part 125, the cathode tab 126 may be attached to the insulating member 127. In addition, one end of the cathode tab 126 may be electrically connected to the cathode center uncoated part 125, and the other end may protrude and extend to the outside. The insulating member 127 is attached to the cathode center uncoated part 125 while surrounding the cathode tab 126. In addition, the insulating member 127 may also be attached to a surface opposite to the surface to which the cathode tab 126 is attached. Here, the sum of the thickness of the cathode tab 126 and the thickness of the insulating member 127 may be equal to or smaller than the thickness of the cathode active material layer 122. The insulating member 127 may be made of, for example, an insulating tape containing polyphenylene sulfide (PS), polyimide (PI), or polypropylene (PP). The insulating member 127 may prevent the cathode tab 126 and/or the cathode current collector 121 from being short-circuited with the anode plate 110.

As described above, a form in which the electrode tabs 116 and 126 are attached to the center of the current collectors 111 and 121 may be referred to as a middle tab structure. When the electrode assembly 100 is formed by winding the current collectors 111 and 121 having a middle-tab structure, the electrode tabs 116 and 126 protrude from the middle portion between the winding center and the outermost part of the electrode assembly 100. In FIG. 1, the lengths of the anode plate 110 and the cathode plate 120 are shown as being reduced from actual lengths, and the anode center uncoated part 115 and the cathode center uncoated part 125 are respectively positioned approximately in middle portions of the entire lengths of the current collector 111 and 121.

The separator 130 is interposed between the anode plate 110 and the cathode plate 120 to prevent an electrical short between the anode plate 110 and the cathode plate 120. In practice, a pair of separators 130 are provided, and the cathode plate 120 is held between the pair of separators 130. In addition, the separator 130 may be formed of, for example, but not limited to, any one selected from the group consisting of polyethylene, polypropylene, and a porous copolymer of polyethylene and polypropylene. In some examples, the separator 130 may be formed to be wider than the anode plate 110 and the cathode plate 120 in order to prevent an electrical short between the anode plate 110 and the cathode plate 120. In addition, the separator 130 may include, but not limited to, a solid electrolyte (e.g., an inorganic ceramic-based electrolyte or a polymer-based electrolyte, such as perovskite-based, NASICON-based, LISICON-based, sulfide-based, garnet-based, or glass-based electrolyte). In this case, the liquid electrolyte may be omitted.

The insulation coating layer 140 is coated on both sides of the cathode current collector 121. The insulation coating layer 140 may include a first insulation coating layer 141 coated on the first surface 121a of the cathode current collector 121 and a second insulation coating layer coated on the second surface 121b of the cathode current collector 121. The insulation coating layer 140 may be formed at one side of the cathode center uncoated part 125. Referring to FIG. 2, a region where winding starts in the cathode current collector 121 may be defined as a front end P1, and a region where winding ends may be defined as a terminal end P2. The insulation coating layer 140 may be formed on the cathode current collector 121 located at the terminal end P2 with respect to the cathode center uncoated part 125. Here, the insulation coating layer 140 may be formed on a portion adjacent to the cathode center uncoated part 125.

The insulation coating layer 140 may be formed by removing a portion of the region where the cathode active material layer 122 is formed to expose the cathode current collector 121 and coating the exposed cathode current collector 121 with a ceramic material. In some examples, the insulation coating layer 140 may be formed without forming the cathode active material layer 122 in a region of the cathode current collector 121, where the insulation coating layer 140 is to be formed, that is, by intermittently coating a cathode active material to form the cathode active material layer 122 and coating a ceramic material on a portion where the cathode active material is not coated. Therefore, the cathode active material layer 122 may be positioned at both sides of the insulation coating layer 140. For example, as shown in FIG. 3, when the distance between the cathode tab 126 and the anode tab 116 is greater than the width of the center uncoated parts 115 and 125, the cathode active material layer 122 may be positioned between the second insulation coating layer 142 and the cathode center uncoated part 125. In another example, when the distance between the cathode tab 126 and the anode tab 116 is equal to the width of the center uncoated parts 115 and 125, the second insulation coating layer 142 may be formed at one end of the cathode center uncoated part 125. In this case, the cathode active material layer 122 may be positioned only at one side of the second insulation coating layer 142.

As shown in FIG. 3, when the electrode assembly 100 is formed by winding a laminate of the anode plate 110, the separator 130, the cathode plate 120, and the separator 130 from the front end P1, the insulation coating layer 140 faces the anode center uncoated part 115 having the anode tab 116 formed thereon. In other words, the insulation coating layer 140 is positioned on a portion facing the anode tab 116. In some examples, the insulation coating layer 140 may be formed on a portion facing the anode tab 116, a portion facing the anode tab 116 and the anode center uncoated part 115, or a portion facing the anode tab 116, the anode center uncoated part 115, and the insulating member 117. In detail, the first insulation coating layer 141 formed on the first surface 121a of the cathode current collector 121 is located at a portion corresponding to the anode center uncoated part 115 formed on the second surface 111b of the anode current collector 111. In addition, the second insulation coating layer 142 formed on the second surface 121b of the cathode current collector 121 is located at a portion corresponding to the anode center uncoated part 115 formed on the first surface 111a of the anode current collector 111. That is, the first insulation coating layer 141 may be positioned to be spaced apart from the second insulation coating layer 142. In detail, the first insulation coating layer 141 may be located to be spaced apart from the second insulation coating layer 142 by a one-turn moving distance in the winding direction of the electrode assembly 100. In addition, the first and second insulation coating layers 141 and 142 may be formed to have widths equal to or greater than the width of the anode center uncoated part 115. Accordingly, the upper and lower portions of the anode center uncoated part 115 having the anode tab 116 attached thereto may be covered by the first insulation coating layer 141 and the second insulation coating layer 142 The insulation coating layer 140 may prevent a short between each of the anode tab 116 and the anode center uncoated part 115 and the cathode plate 120.

The insulation coating layer 140 may include an insulating material, such as a ceramic material. For example, the ceramic material may include Al₂O₃, SiO₂, TiO₂, SnO₂, CeO₂, MgO, NiO, CaO, ZnO, ZrO₂, Y₂O₃, SrTiOs, BaTiOs, Mg(OH)₂, or a combination thereof. By including an inorganic compound, the ceramic material may improve heat resistance, thereby preventing rapid contraction or deformation of the separator 130 due to a temperature rise.

The insulation coating layer 140 may have the same thickness as the cathode active material layer 122. Therefore, when the electrode assembly 100 is formed, the cathode plate 120 and the anode plate 110 are wound in a flat shape with the separator 130 interposed therebetween, thereby solving a problem of lithium precipitation due to a thickness difference between the cathode plate 120 and the anode plate 110). In addition, as the coating method of the insulation coating layer 140, a conventional coating method known in the art may be used, including, a variety of methods, such as, for example, dip coating, spin coat coating, roll coating, Meyer bar coating, comma coating, die coating, gravure coating, screen printing, offset printing, brush coating, spraying, or a mixture thereof.

As such, in the electrode assembly 100 according to the present invention, by forming an insulation coating layer 140 on the cathode plate 120 facing the anode tab 116, a short circuit between the cathode plate 120 and the anode tab 116 can be prevented, thereby improving safety and reliability. In addition, in the electrode assembly 100 according to the present invention, by forming the insulation coating layer 140 having the same thickness as the cathode active material layer 122 between the cathode active material layers 122, the flatness and gap uniformity between pole plates can be secured, thereby improving safety.

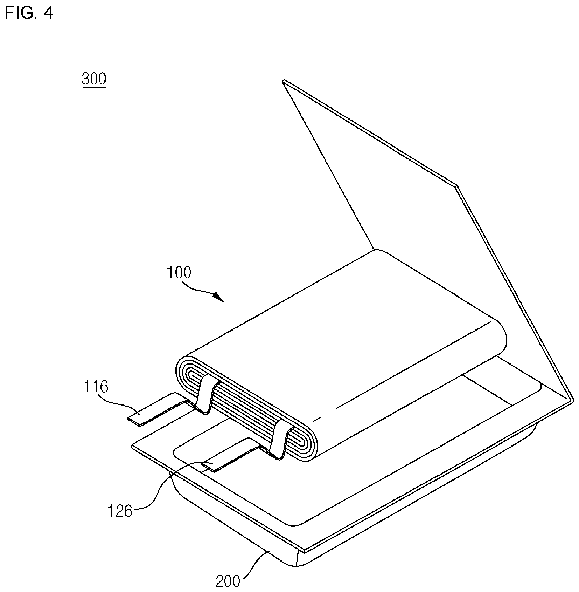

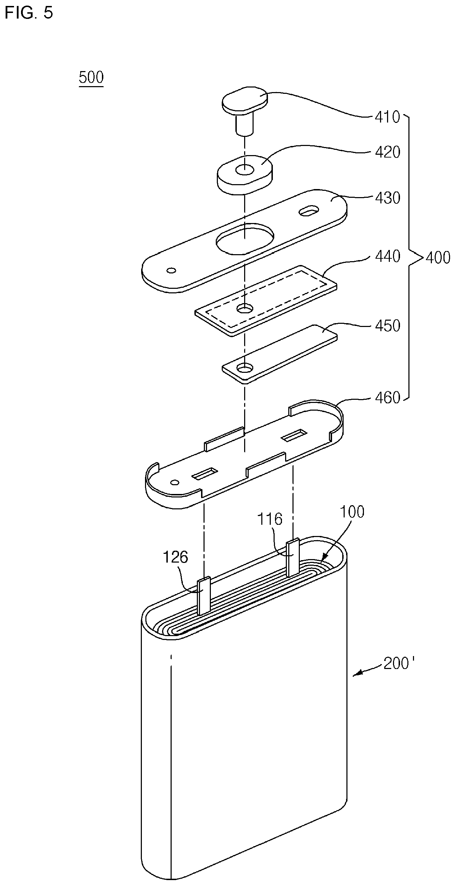

FIGS. 4 and 5 are exploded perspective views showing a secondary battery using an electrode assembly according to the present invention.

As shown in FIG. 4, the electrode assembly 100 shown in FIGS. 1 to 3 may be accommodated in a case 200 to form a secondary battery 300.

The case 200 may be formed of a pouch type case. For example, the case 200 may include a lower case having a recess in which the electrode assembly 100 is accommodated and an upper case coupled to the lower case. In some examples, The case 200 may have a multi-layered structure including a first insulating layer, a metal layer, and a second insulating layer. The first insulating layer, which is an inner surface of the case 200, may be formed of a material having insulating properties and thermal adhesiveness. The metal layer is interposed between the first insulating layer and the second insulating layer, and may serve to prevent moisture and oxygen from entering from the outside and prevent an electrolyte inside from leaking out to the outside. The second insulating layer, which is an outer surface of the case 200, may serve to mitigate mechanical and chemical shocks with respect to external electronic devices.

In addition, as shown in FIG. 5, the electrode assembly 100 may be accommodated in a case 200', and a cap assembly 400 may be coupled to an upper portion of the case 200' to form a secondary battery 500.

The case 200' may be formed of a conductive metal such as aluminum, aluminum alloy, or nickel-plated steel, and may have a substantially hexahedral shape having an opening into which the electrode assembly 100 may be inserted and seated. The case 200' may have a polarity, for example, a positive polarity.

The cap assembly 400 is located above the electrode assembly 100 and is coupled to the opening of the case 200' to seal the case 200'. In some examples, the cap assembly 400 may include an electrode terminal 410, a gasket 420, a cap plate 430, an insulation plate 440, a terminal plate 450, and an insulation case 460. A gasket 420 is inserted between the electrode terminal 410 and the cap plate 430, and the electrode terminal 410 and the terminal plate 450 may be electrically connected to each other. The insulation plate 440 may insulate the cap plate 430 and the terminal plate 450 from each other. The insulation case 460 may be formed in the opening of the case 200' to seal the case 200'. The insulation case 460 may have a hole formed therein to allow the anode tab 116 and the cathode tab 126 to pass therethrough.

What has been described above is only one embodiment for carrying out the electrode assembly and the secondary battery using same, according to the present invention, and the present invention is not limited to the above-described embodiment. However, the technical spirit of the present invention lies in that anyone skilled in the art could make various changes, as claimed in the claims below, without departing from the gist of the present invention.

### INDUSTRIAL APPLICABILITY

The present invention can be used in the field of electrode assemblies and secondary batteries using same.

## Claims

1. A secondary battery comprising:
an anode plate comprising an anode current collector, an anode active material layer formed by coating an anode active material on the anode current collector, and an anode center uncoated part in which an anode tab is attached to the center of the anode current collector;
a cathode plate comprising a cathode current collector, a cathode active material layer formed by coating a cathode active material on the cathode current collector, and a cathode center uncoated part in which a cathode tab is attached to the center of the cathode current collector;
a separator interposed between the anode plate and the cathode plate; and
an electrode assembly formed of an insulation coating layer formed on a portion, on the cathode current collector, facing the anode tab, a portion facing the anode tab and the anode center uncoated part, or a portion facing the anode tab, the anode center uncoated part, and an insulating member attached to the anode tab.

2. The secondary battery of claim 1, wherein the insulation coating layer includes a first insulation coating layer formed on a first surface of the cathode current collector and a second insulation coating layer formed on a second surface opposite to the first surface.

3. The secondary battery of claim 2, wherein the first insulation coating layer faces an anode center uncoated part located on the second surface of the anode current collector.

4. The secondary battery of claim 2, wherein the second insulation coating layer faces an anode center uncoated part located on the first surface of the anode current collector.

5. The secondary battery of claim 2, wherein the second insulation coating layer is positioned to be spaced apart from the first insulation coating layer by a one-turn moving distance in the winding direction of the electrode assembly.

6. The secondary battery of claim 2, wherein the first insulation coating layer and the second insulation coating layer are formed at one side of the cathode center uncoated part.

7. The secondary battery of claim 1, wherein the insulation coating layer may include a ceramic material.

8. The secondary battery of claim 7, wherein the ceramic material may be formed of any one of Al₂O₃, SiO₂, TiO₂, SnO₂, CeO₂, MgO, NiO, CaO, ZnO, ZrO₂, Y₂O₃, SrTiOs, BaTiOs, Mg(OH)₂, or a combination thereof.

9. The secondary battery of claim 1, wherein a width of the insulation coating layer may be equal to or greater than a width of the anode center uncoated part.

10. The secondary battery of claim 1, wherein a thickness of the insulation coating layer may be the same as that of the cathode active material layer.
